# EUROPEAN PATENT SPECIFICATION

(11) **EP 2 233 348 B1**
(45) Date of publication and mention of the grant of the patent: **02.11.2011**
(21) Application number: 10156789.9
(22) Date of filing: 17.03.2010
(51) Int. Cl.: B60N 2/28

(54) **Child car seat with lateral stabilizers**
Fahrzeugkindersitz mit seitlichem Stabilisator
Siège auto pour enfant ayant des stabilisateurs latéraux

(30) Priority: 24.03.2009 IT MI20090453
(43) Date of publication of application: 29.09.2010
(73) Proprietor: ARTSANA S.p.A., 22070 Grandate (Como) (IT)
(72) Inventor: Damiani, Osvaldo, 24035, Curno (BG) (IT)
(74) Representative: Ripamonti, Enrico

(56) References cited:
- EP-A- 0 560 184
- WO-A-2007/101212
- DE-A1-102007 023 240
- GB-A- 2 419 154
- US-A1- 2003 030 311

## Description

The present invention relates to a child car seat in accordance with the introduction to the main claim. The preambls of the main claim refers to US2003/030311.

The invention refers to a child car seat of the type for supporting children of weight exceeding 15 kg and for enabling them to be transported. This child seat presents means for cooperating with the usual seatbelts provided at a vehicle seat on which the child seat can be positioned, said belts fixing and rigidly retaining the child seat on said vehicle seat.

Moreover, cars produced and/or sold in Europe after 2006 have usually to be provided by law with ISOFIX fitting points fixed to the vehicle body and positioned at its rear seat. These members cooperate with coupling elements usually associated with the base of child seats for containing and transporting a child. The coupling elements are generally carried at the end of supports which translate relative to said base along an axis lying in a plane substantially parallel to the sitting portion of the vehicle seat. Cooperation between said coupling elements and the fixed vehicle members enables the child seat to be fixed extremely stably, safely and practically.

In the case of child seats for children weighing more than 15 kg, they are secured to the vehicle seat by using three-point car safety belts. For this reason, said child seats do not comprise ISOFIX coupling elements.

With these child seats, which are of simplified construction because they are not provided with said coupling elements, there is the problem of providing transverse stability to the child seat. In other words, there is the problem of preventing the child seat from shifting laterally along the sitting portion of the vehicle seat, both when the child is positioned and not positioned thereon. In this latter case the child seat is not usually secured to the vehicle seat by the safety belts and can therefore move transversely on the vehicle seat during normal vehicle movement (for example round a curve).

With a child seat of the aforesaid type it is known to associate belts which, for example, roll up into the body of the child seat, and are associated with the base of this latter (where the child sitting portion is present). These belts are provided with elements for coupling to the vehicle fixed members (ISOFIX), but are positioned only parallel to the sitting portion of the vehicle seat, their function being merely to retain the child seat associated with the vehicle seat as close as possible to the back rest of this latter.

This known solution only prevents the child seat from moving parallel to the vehicle longitudinal axis, but because of their form of construction they do not prevent its lateral movement on the vehicle seat. The child seat can hence move laterally on this latter, for example round a curve, with obvious problems especially when the child is not positioned thereon and it is hence not secured to the vehicle seat by the safety belt.

An object of the present invention is to provide, for children weighing more than 15 kg, a child car seat arranged to cooperate with the vehicle safety belts when containing the child, which represents an improvement over similar known child seats.

A particular object of the invention is to provide a child car seat of the aforestated type which can assume a stable position towards lateral movements (i.e. perpendicular to the vehicle longitudinal axis) along the vehicle seat sitting portion, both when the child is positioned thereon and, in particular, when the child is not positioned thereon and the three-point vehicle safety belts are not in use to lock the child seat onto the vehicle seat.

Another object is to provide a child seat of the aforestated type which is simple and safe to use and enables the child seat to be used in a stable position even when the child is not positioned on it, so avoiding the need to remove the child seat from the vehicle seat each time the vehicle is to be driven after removing the child from it.

These and other objects which will be apparent to the expert of the art are attained by a child seat in accordance with the accompanying claims.

The present invention will be more apparent from the accompanying drawings, which are provided by way of non-limiting example and in which:
Figure 1 is a side perspective view of a child seat according to the invention,
shown without certain parts for greater clarity;

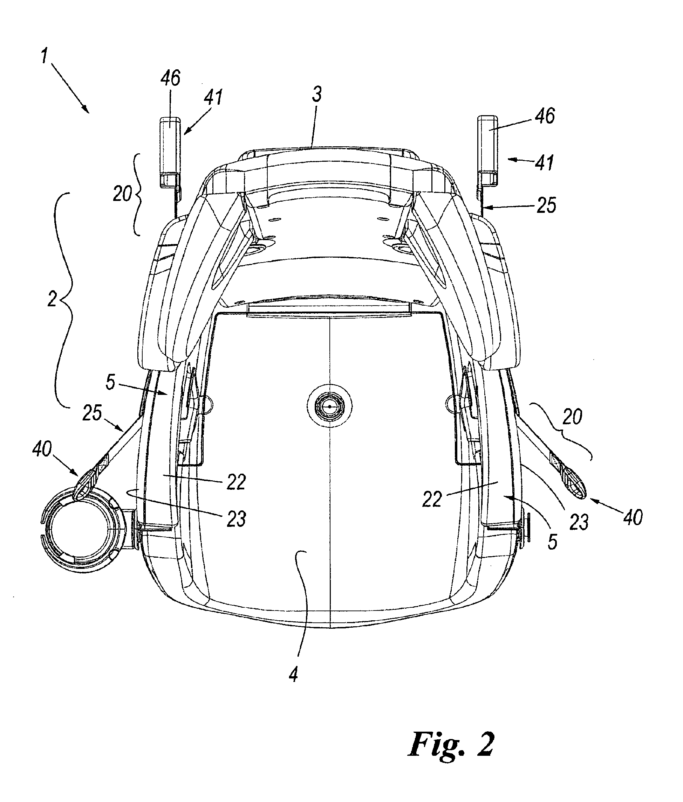

Figure 2 is a view of the child seat of Figure 1 seen from above;

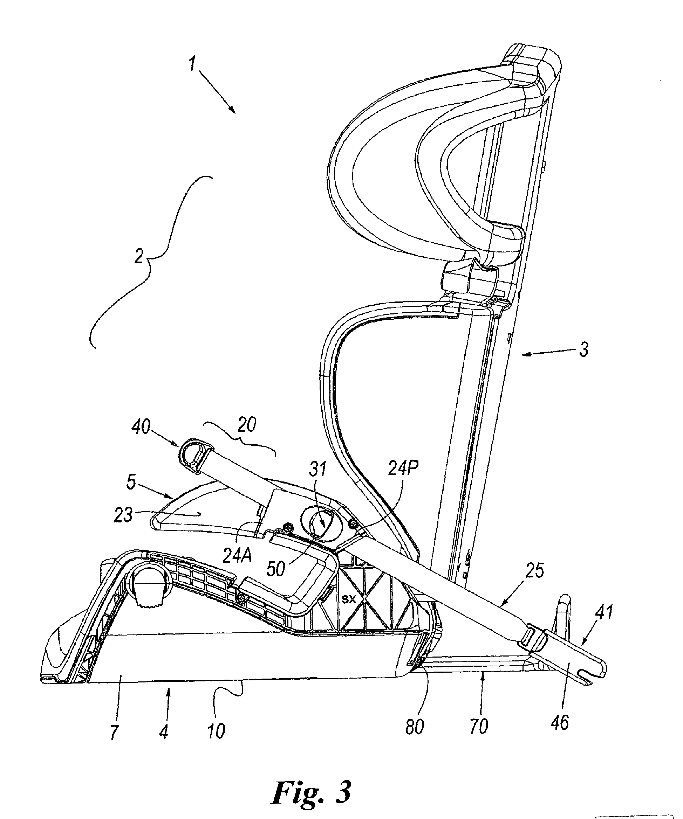

Figure 3 is a side view of the child seat of Figure 1;

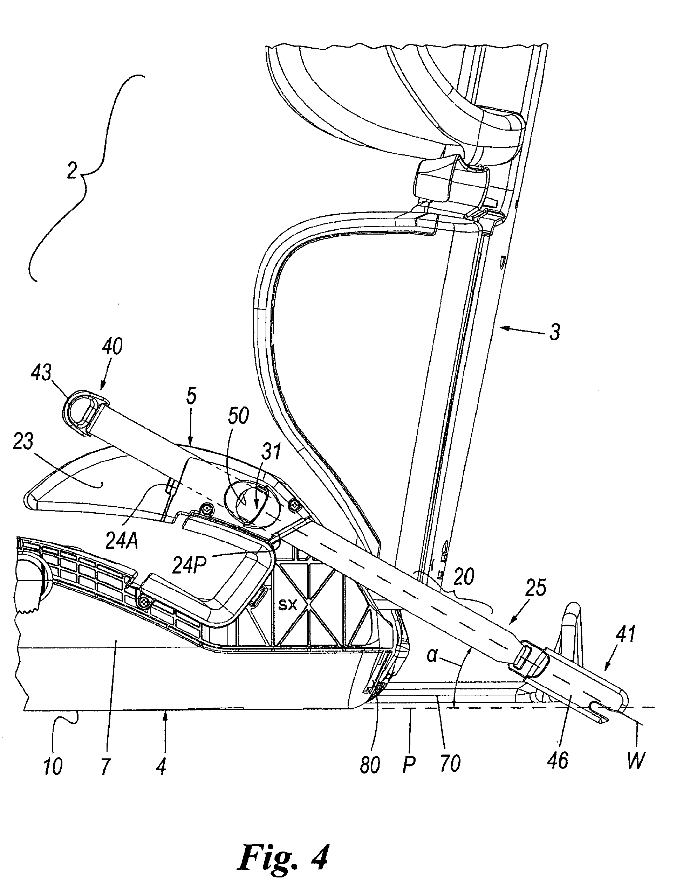

Figure 4 is an enlarged side view of the child seat of Figure 1; and
Figure 5 is an enlarged view of a detail of the child seat of Figure 1.

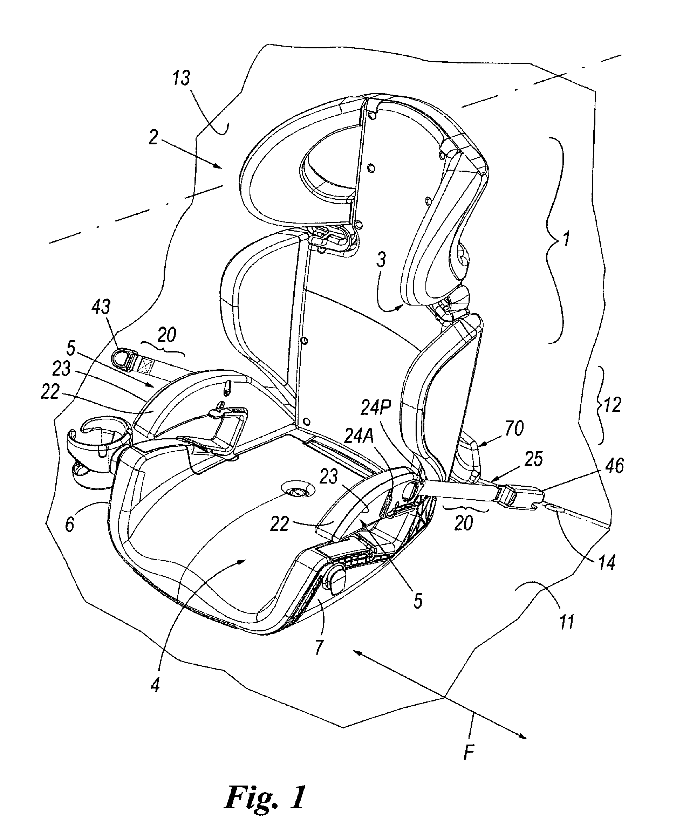

With reference to said figures, a child seat according to the invention is indicated overall by 1 and comprises a body 2 presenting a backrest 3 and a base or sitting portion 4 provided with lateral arms 5 positioned, raised from the base, at opposing sides 6 and of this latter. The arms 5 are raised, in particular, relative to a lower side 10 of the base 4 by which this latter rests on a sitting portion 11 of a vehicle seat 12. This latter also comprises a backrest 13 and, between the backrest and sitting portion, usual known ISOFIX fitting members 14 (only one is visible in Figure 1) to cooperate with the child seat 1, as indicated hereinafter. The child seat is also provided with usual means (not shown) for cooperating with a usual three-point safety belt (also not shown) on the vehicle to retain the child seat 1 associated with the vehicle seat 12 when a child is positioned therein. According to the invention, the child seat 1 is provided with lateral stabilizer means 20 to cooperate with the coupling members 14 in order to provide lateral stability to the child seat such that it does not move transversely (arrow F of Figure 1) on the sitting portion of the vehicle seat 12.

More particularly, each arm 5 comprises a box structure presenting a first portion 22 (internal with respect to the base or sitting portion 4) on which an external second portion 23 is positioned and fixed. This latter portion presents slots 24A, 24P through which a belt 25 is slidably positioned.

The belt, forming part of said means 20, internal to the arm 5, i.e. between its portions 22 and 23, cooperates with a locking member or openable buckle 28 which enables the belt either to slide through it or be locked. For this purpose, this member or buckle 28 comprises two portions 30 and 31, the first fixed to the first portion 22 of the arm 5 and the second 31 hinged to flanges 33 rising laterally from the first portion 30 of the buckle 28.

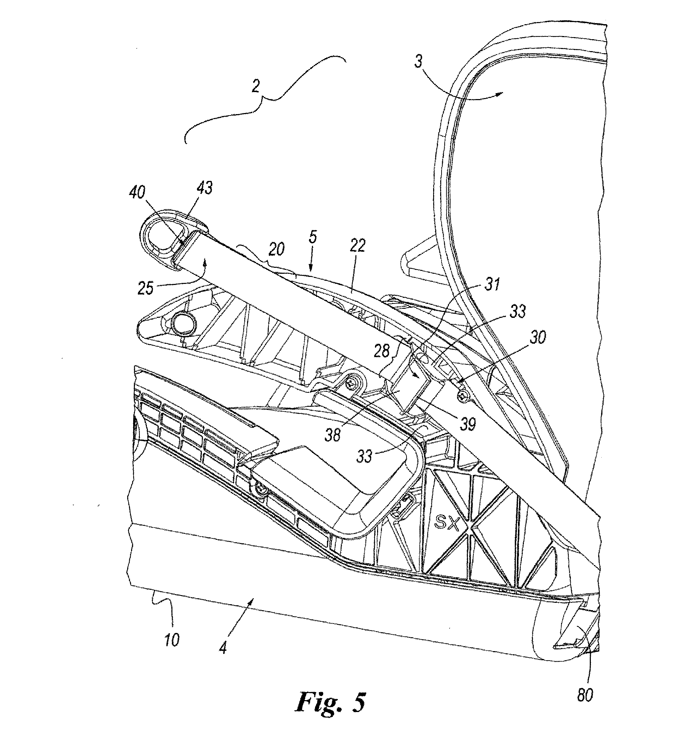

The second portion 31 of the buckle 28 is preferably arranged to assume, when at rest, a position such as to cooperate with the belt 25 positioned between it and the first portion 30 to block its sliding between these portions. This position, for example, is that shown in Figure 5 in which the second portion 31 meets the belt 25 angularly, within the passageway, at a first end 38. However, this portion 31 can re-enable sliding of the belt 25 by assuming a second working position, this position being obtained by pressing a second end 39 of the portion 31 raised from the belt such as to lift the first end 38 from this latter. Lifting the first end enables the belt 25 to slide through the slots 24A, 24P of the arm 5. In this respect, it can be seen that each belt 5 comprises a first end 40 which withdraws from the relative arm 5 and a second end 41 which approaches the vehicle seat 11.

The first end 40 comprises a gripping element 43, for example of annular shape, to enable the belt to be pulled away from the arm 5 (and hence to emerge from the front slot 24 thereof). The second end 41 carries a coupling element 46 for coupling to the corresponding ISOFIX member 14. In the embodiment shown in the figure, this coupling element is of known parallelepiped type with its end provided with an element (also known and not shown) for its fixing to the member 14. The element 46 can be gripped to move the belt in order to extract it from the rear slot 24P of the arm and move said element towards said member. The element 46 can evidently also be formed differently, as a hook or spring catch engagable with the member 14.

By moving the belt, enabled by pressing the second end 39 of the buckle 28 via an aperture 50 provided in the second portion 23 of the arm 5, the coupling element 46 is able to be fixed to the member 14 (by slackening the belt and pulling it towards the backrest 13 of the vehicle seat 12) and the belt then tightened by pulling the gripping element 43 away from the arm.

When the element 46 is coupled to the member 14 and the belt has been tightened, an angle α is formed between the belt axis W and plane P of the sitting portion 11, i.e. the plane in which the side 10 of the child seat base 4 lies. This angle is at least equal to or greater than 30°.

For a movement force directed along the arrow F, this solution enables a resultant force to be created on each side 6, 7 of the child seat 1, which maintains the child seat securely in position, even if a child is not positioned on it and hence there is no cooperation with the three-point safety belt on the vehicle seat 11.

This is enabled by the fact that each belt 20 is connected to the member 14 by an arrangement involving an acute angle to the plane P, its axis W therefore not being parallel or substantially parallel to this latter.

The child seat 1 also comprises an L-shaped spacer member 70, extendable from the child seat base 4 to the backrest 13 of the vehicle seat 12 and controllable, in its free movement relative to said base 4, by the pusher 71 provided in this latter. The child seat also comprises, in its base 4, seats 80 for receiving the coupling elements 46 when not used and the child seat has been removed from the vehicle. A preferred embodiment of the invention has been described. Others are however possible, such as one in which each belt 25 emerges from a front part of the corresponding arm 5 and hence involves a large part of the arm itself. This embodiment and others which can be deduced by the expert of the art from the aforegoing description are to be considered as falling within the scope of the following claims.

## Claims

1. A child car seat (1) comprising a body (2) having a backrest (3) and a base (4), lateral arms (5) rising from the base (4), and means for cooperating with a usual vehicle safety belt, said cooperation enabling the child seat (1) to be fixed to a vehicle seat (11) on which it can be positioned, the vehicle seat (11) being provided with fixed fitting members (14) for the child seat, in both arms (5), slidable stabilizer means (20) being provided carrying at their ends an element (46) for coupling to a corresponding fixed fitting member (14) of the vehicle seat (11), said slidable means (20) being tensionable and lockable in a taut position in which they prevent any transverse movement of the child seat on said vehicle seat (11),
**characterised in that** said lateral stabilizer means (20) comprise, for each arm (5), a belt (25) slidably coupled to this latter but lockable thereto when tensioned, said belt (25) presenting a free first end (40) and a second end (41) presenting the element (46) for coupling to the fixed fitting member (14) of the vehicle seat (11), this latter member (14) being an ISOFIX fitting member, said first and second end (40, 41) being disposed in opposing positions relative to the arm (5), the belt (25) being slidably associated with this latter in a lockable manner and emerging from slots (224A, 24P) thereof each belt being slidably positioned through slots (24A, 24P) and protruding from the arm.

2. A child seat as claimed in claim 1, **characterised in that** the coupling element (46) is a known element able to cooperate with the ISOFIX fitting member (14).

3. A child seat as claimed in claim 1, **characterised in that** the coupling element (46) is a hook-shaped element such as a spring catch, hook or the like.

4. A child car seat as claimed in claim 1, **characterised in that** the slots (24A, 24P) are provided within an external portion (23) of the arm (25), this latter having a structure comprising an internal portion (22) and the aforesaid external portion (23).

5. A child car seat as claimed in claim 1, **characterised by** comprising locking means (28) enabling the belt (25) to slide or to be locked to the arm.

6. A child car seat as claimed in claim 5, **characterised in that** said locking means are a member or buckle presenting a fixed first portion (30) rigid with the arm (5) and a second portion (31) movable relative to the first and hinged to flanges (33) rising from this latter, the belt (25) being able to lockably slide between said first and second portion (30, 31), locking being achieved by the cooperation of the second portion (31) with the belt when this portion is positioned to meet this latter so as to clamp it against the first portion (30) of the buckle and to act as a clamp with this latter.

7. A child seat as claimed in claim 6, **characterised in that** said buckle (28) is internal to the arm (5), there being provided in this latter an aperture (50) enabling the second portion (31) of the buckle to be reached from outside the arm and to o enable belt sliding to be released or blocked relative to the arm.

8. A child seat as claimed in claim 6, **characterised in that** when in the rest position, said second portion (31) of the buckle (28) blocks belt sliding relative to the arm.

9. A child seat as claimed in claim 7, **characterised in that** the buckle (28) is 15 positioned between the internal portion (22) and the external portion (23) of the arm (5), the aperture (50) being provided in the external portion of the arm (5), the buckle being rigid with the internal portion of this latter.

10. A child seat as claimed in claim 1, **characterised in that** said belt (25) is disposed with its longitudinal axis (W) forming an acute angle (α) to a plane (P) on which the child seat rests, said plane (P) being the plane of the sitting portion (11) of the vehicle seat, on said plane (P) there lying a lower side (10) of the child seat base (4).

11. A child seat as claimed in claim 1, **characterised by** comprising a spacer member (70) extractable from the base in order to cooperate with the backrest (13) of the vehicle seat (11) and controllable, in its free movement relative to the child seat base (4), by the pusher (71) associated with this latter.

## Patentansprüche

1. Autokindersitz (1) umfassend einen Körper (2), welcher eine Rückenlehne (3) und eine Sitzfläche (4), Seitenarmlehnen (5), welche von der Sitzfläche (4) nach oben verlaufen, und Mittel für ein Zusammenwirken mit einem gewöhnlichen Fahrzeugsicherheitsgurt besitzt, wobei durch das Zusammenwirken der Kindersitz (1) an einem Fahrzeugsitz (11), auf welchem er positioniert werden kann, befestigt werden kann, wobei der Fahrzeugsitz (11) mit befestigten Anschlusselementen (14) für den Kindersitz ausgestattet ist, wobei in beiden Armlehnen (5) verschiebbare Stabilisierungsmittel (20) vorgesehen sind, die an ihren Enden ein Element (46) zum Verbinden mit einem korrespondierenden befestigten Anschlusselement (14) des Fahrzeugsitzes (11) tragen, wobei die verschiebbaren Mittel (20) spannbar und verriegelbar in einer straffen Position sind, in welcher sie eine Querbewegung des Kindersitzes auf dem Fahrzeugsitzes (11) verhindern,
**dadurch gekennzeichnet,**
**dass** die seitlichen Stabilisierungsmittel (20) für jede Armlehne (5) einen Gurt (25) umfassen, welcher seitlich mit der Letzteren verschiebbar verbunden ist, aber daran verriegelbar ist, wenn er gespannt ist, wobei der Gurt (25) ein freies erstes Ende (40) und ein zweites Ende (41) aufweist, das ein Element (46) zum Verbinden mit dem befestigten Anschlusselement (14) des Fahrzeugsitzes (11) aufweist, wobei das letztere Element (14) ein ISOFIX Anschlusselement ist, wobei das erste und zweite Ende (40, 41) in gegenüberliegenden Positionen relativ zur Armlehne (5) angeordnet sind, wobei der Gurt (25) verschiebbar verbunden mit der Letzteren in einer verschließbaren Art ist und wobei der Gurt aus Schlitzen (24A, 24P) hervorgeht, wobei jeder Gurt verschiebbar durch Schlitze (24A, 24P) positioniert ist und von der Armlehne (5) hervor steht.

2. Autokindersitz nach Anspruch 1, **dadurch gekennzeichnet, dass** das Verbindungselement (46) ein bekanntes Element ist, welches mit dem ISOFIX Anschlusselement (14) zusammenwirken kann.

3. Autokindersitz nach Anspruch 1, **dadurch gekennzeichnet, dass** das Verbindungselement (46) ein hakenförmiges Element ist, wie zum Beispiel ein Fangriemen, ein Haken oder ähnliches.

4. Autokindersitz nach Anspruch 1, **dadurch gekennzeichnet, dass** die Schlitze (24A, 24P) um einem äußeren Abschnitt (23) der Armlehne (25) vorgesehen sind, wobei Letzterer eine Struktur aufweist, welche einen inneren Abschnitt (22) und den vorbenannten äußeren Abschnitt (23) umfasst.

5. Autokindersitz nach Anspruch 1, **dadurch gekennzeichnet, dass** er von Verschlussmittel (28) umfasst, durch welche der Gurt (25) sich verschieben oder an der Armlehne angeschlossen sein kann.

6. Autokindersitz nach Anspruch 5, **dadurch gekennzeichnet, dass** die Verschlussmittel (28) ein Element oder ein Gurtschloss sind, welche einen befestigten ersten Abschnitt (30) starr verbunden mit der Armlehne (5) und einen zweiten Abschnitt (31) beweglich relativ zu der ersten und angelenkt an Flansche (33), welche nach oben von Letzteren verlaufen, umfasst, wobei der Gurt (25) fähig ist sich verriegelbar zwischen dem ersten und dem zweiten Abschnitt (30,31) zu verschieben, wobei ein Verschluss durch das Zusammenwirken von dem zweiten Abschnitt (31) und den Gurt erreicht wird, wenn dieser Abschnitt positioniert ist, um den Letzteren zu treffen, um ihn gegen den ersten Abschnitt (30) des Gurtschlosses zu klemmen, und als Klemme mit dem Letzteren zu fungieren.

7. Autokindersitz nach Anspruch 6, **dadurch gekennzeichnet, dass** sich das Gurtschloss (28) auf der Innenseite der Armlehne (5) befindet, wobei es dort in den Letzteren mit einer Öffnung (50) versehen ist, dennoch dann den zweiten Abschnitt (31) des Gurtschlosses (28) von der Außenseite der Armlehne erreicht werden kann, wodurch der Gurt verschiebbar hergegeben oder blockiert relativ zur Armlehne sein kann.

8. Autokindersitz nach Anspruch 6, **dadurch gekennzeichnet, dass** der zweite Abschnitt (31) des Gurtschlosses (28), wenn in der Ruhelage ist, eine Gurtverschiebung relativ zur Armlehne blockiert.

9. Autokindersitz nach Anspruch 7, **dadurch gekennzeichnet, dass** das Gurtschloss (28) zwischen dem inneren Abschnitt (22) und dem äußeren Abschnitt (23) der Armlehne (5) positioniert ist, wobei die Öffnung (50) in dem äußeren Abschnitt (23) der Armlehne (5) vorgesehen ist, wobei das Gurtschloss (28) mit dem inneren Abschnitt (22) des Letzteren starr verbunden ist.

10. Autokindersitz nach Anspruch 1, **dadurch gekennzeichnet, dass** der Gurt (25) angeordnet ist, um mit seiner Längsachse (W) einen spitzen Winkel (α) mit einer Fläche (P), auf welcher der Kindersitz ruht, zu bilden, wobei die Fläche (P) die Fläche des Sitzabschnitts (11) des Fahrzeugsitzes ist, wobei dort auf der Fläche (P) die Unterseite (10) der Sitzfläche (4) aufliegt.

11. Autokindersitz nach Anspruch 1, **dadurch gekennzeichnet, dass** er ein Abstandhalterelement (70) umfasst, welches von der Sitzfläche ausziehbar ist, um mit der Rückenlehne (13) des Fahrzeugsitzes (11) zusammen zu wirken, und das durch den Schieber (71), welcher mit dem Letzteren verbunden ist, in seiner freien Bewegung relativ zum Kindersitzbodens (4) steuerbar ist.

## Revendications

1. Siège de sécurité pour enfant (1) comprenant un corps (2) ayant un dossier (3) et une base (4), des bras latéraux (5) s'élevant depuis la base (4), et un moyen coopérant avec une ceinture de sécurité classique de véhicule, ladite coopération permettant de fixer le siège de sécurité pour enfant (1) sur un siège de véhicule (11) sur lequel il peut être positionné, le siège de véhicule (11) étant muni d'éléments de fixation fixes (14) pour le siège de sécurité pour enfant, dans les deux bras (5), des moyens stabilisateurs coulissants (20) étant prévus pour supporter à leurs extrémités un élément (46) destiné à être couplé à un élément de fixation fixe (14) correspondant du siège de véhicule (11), lesdits moyens coulissants (20) pouvant être tendus et bloqués dans une position tendue dans laquelle ils empêchent tout mouvement transversal du siège de sécurité pour enfant sur ledit siège de véhicule (11), **caractérisé en ce que** lesdits moyens stabilisateurs latéraux (20) comprennent, pour chaque bras (5), une ceinture (25) couplée de manière coulissante au bras, mais pouvant être bloquée sur celui-ci lorsqu'elle est tendue, ladite ceinture (25) présentant une première extrémité libre (40) et une deuxième extrémité (41) présentant un élément (46) destiné à être couplé à l'élément de fixation fixe (14) du siège de véhicule (11), ce dernier élément (14) étant un élément de fixation ISOFIX, lesdites première et deuxième extrémités (40, 41) étant disposées dans des positions opposées par rapport au bras (5), la ceinture (25) étant associée de manière coulissante à ce dernier de manière à pouvoir se bloquer et sortant par des fentes (24A, 24P), chaque ceinture étant positionnée de manière coulissante à travers les fentes (24A, 24P) et faisant saillie depuis le bras.

2. Siège pour enfant selon la revendication 1, **caractérisé en ce que** l'élément d'accouplement (46) est un élément connu capable de coopérer avec l'élément de fixation ISOFIX (14).

3. Siège pour enfant selon la revendication 1, **caractérisé en ce que** l'élément d'accouplement (46) est un élément en forme de crochet tel qu'un verrou à ressort, un crochet ou analogue.

4. Siège de sécurité pour enfant selon la revendication 1, **caractérisé en ce que** les fentes (24A, 24P) sont placées dans une portion extérieure (23) du bras (5), ce dernier ayant une structure comprenant une portion intérieure (22) et la portion extérieure (23) susmentionnée.

5. Siège de sécurité pour enfant selon la revendication 1, **caractérisé en ce qu'**il comprend un moyen de verrouillage (28) permettant à la ceinture (25) de coulisser ou d'être verrouillée sur le bras.

6. Siège de sécurité pour enfant selon la revendication 5, **caractérisé en ce que** ledit moyen de verrouillage est un élément ou une boucle présentant une première portion fixe (30) rigide par rapport au bras (5) et une deuxième portion (31) mobile par rapport à la première portion et articulée à des rebords (33) s'élevant depuis cette dernière, la ceinture (25) étant capable de coulisser de manière à pouvoir se bloquer entre lesdites première et deuxième portions (30, 31), le verrouillage étant obtenu grâce à la coopération entre la deuxième portion (31) et la ceinture lorsque cette portion est positionnée de manière à rencontrer cette dernière afin de la serrer contre la première portion (30) de la boucle et d'agir comme un serrage avec cette dernière.

7. Siège pour enfant selon la revendication 6, **caractérisé en ce que** ladite boucle (28) se trouve à l'intérieur du bras (5), une ouverture (50) étant prévue dans ce dernier pour permettre d'atteindre la deuxième portion (31) de la boucle depuis l'extérieur du bras et pour permettre de relâcher ou de bloquer le coulissement de la ceinture par rapport au bras.

8. Siège pour enfant selon la revendication 6, **caractérisé en ce que**, lorsqu'elle est dans la position de repos, ladite deuxième portion (31) de la boucle (28) bloque le coulissement de la ceinture par rapport au bras.

9. Siège de sécurité pour enfant selon la revendication 7, **caractérisé en ce que** la boucle (28) est positionnée entre la portion intérieure (22) et la portion extérieure (23) du bras (5), l'ouverture (50) étant placée dans la portion extérieure du bras (5), la boucle étant rigide par rapport à la portion intérieure de ce dernier.

10. Siège de sécurité pour enfant selon la revendication 1, **caractérisé en ce que** ladite ceinture (25) est disposée de façon que son axe longitudinal (W) forme un angle aigu (α) par rapport à un plan (P) sur lequel le siège de sécurité pour enfant repose, ledit plan (P) étant le plan de la portion d'assise (11) du siège de véhicule, un côté inférieur (10) de la base (4) du siège de sécurité pour enfant reposant dans ledit plan (P).

11. Siège de sécurité pour enfant selon la revendication 1, **caractérisé en ce qu'**il comprend un élément d'écartement (70) pouvant être extrait de la base pour coopérer avec le dossier (13) du siège de véhicule (11) et dont le mouvement libre par rapport à la base (4) du siège de sécurité pour enfant peut être commandé par le poussoir (71) associé à cette dernière.
